Europäisches Patentamt

European Patent Office

Office européen des brevets

(11) Veröffentlichungsnummer: **0 042 541**
**B1**

(12) **EUROPÄISCHE PATENTSCHRIFT**

(45) Veröffentlichungstag der Patentschrift:
18.05.83

(51) Int. Cl.³: **C 01 B 3/22**

(21) Anmeldenummer: **81104453.6**

(22) Anmeldetag: **10.06.81**

(54) **Verfahren und Vorrichtung zur Behandlung eines einer Dampfreformierung**

(30) Priorität: **20.06.80 DE 3023170**

(43) Veröffentlichungstag der Anmeldung:
**30.12.81 Patentblatt 81/52**

(45) Bekanntmachung des Hinweises auf die Patenterteilung:
**18.05.83 Patentblatt 83/20**

(84) Benannte Vertragsstaaten:
**AT BE DE FR IT NL SE**

(56) Entgegenhaltungen:
**DE-A-1 417 795**
**DE-A-1 567 649**
**DE-A-1 792 285**

(73) Patentinhaber: **Linde Aktiengesellschaft,**
**Abraham-Lincoln-Strasse 21, D-6200 Wiesbaden (DE)**

(72) Erfinder: **Lembeck, Manfred, Haus Nr. 61, D-8084 Buch**
**(DE)**
Erfinder: **Kinsella, Patrick W., Welden Strasse 29,**
**D-8190 Wolfratshausen (DE)**
Erfinder: **Watson, Allan, Dr., Meraner Strasse 14A,**
**D-8012 Ottobrunn (DE)**

(74) Vertreter: **Schaefer, Gerhard, Dr., Linde**
**Aktiengesellschaft Zentrale Patentabteilung,**
**D-8023 Höllriegelskreuth (DE)**

Verfahren und Vorrichtung zur Behandlung eines einer Dampfreformierung zu unterwerfenden
Kohlenwasserstoffstromes

Die Erfindung betrifft ein Verfahren und eine Vorrichtung zur Behandlung eines einer Dampfreformierung zu unterwerfenden, unter erhöhtem Druck stehenden Kohlenwasserstoffstromes, das ausserdem mindestens noch eine weitere Verfahrensstufe umfasst, die durch eine Temperaturabsenkung begünstigt wird.

Die Synthesegaserzeugung durch Dampfreformierung von Kohlenwasserstoffen ist eine technisch bedeutsame endotherme Reaktion, die in einem komplexen Verfahren durchgeführt wird und die eine Vielzahl von einzelnen Verfahrensschritten umfasst. Da die optimalen Verfahrensbedingungen, beispielsweise Druck oder Temperatur, in den einzelnen Verfahrensschritten häufig stark von einander abweichen, ist es in der Praxis oftmals erforderlich, einzelne Verfahrensstufen unter weniger günstigen Bedingungen durchzuführen, da eine Optimierung jeder einzelnen Verfahrensstufe keine Optimierung des Gesamtverfahrens ergäbe.

Eine Reihe von Verfahrensschritten wie beispielsweise die adsorptive Reinigung oder Verdichtung eines Gases werden durch Abkühlung des Gasstroms begünstigt. Es ist deshalb Aufgabe der Erfindung, ein Verfahren der eingangs genannten Art so auszugestalten, dass die Verfahrensbedingungen für durch Temperaturabsenkung begünstigte Verfahrensschritte verbessert werden, ohne dass hierzu ein zusätzlicher Energieaufwand aufgebracht werden muss.

Diese Aufgabe wird dadurch gelöst, dass der Einsatzstrom in zwei Teilströme unterteilt wird, von denen der eine der Dampfreformierung zugeführt und dabei umgesetzt wird, während der andere kälteleistend entspannt, mit dem aus der Dampfreformierung kommenden Strom, der der durch Temperaturabsenkung begünstigten Verfahrensstufe zugeführt wird, im Wärmetausch gebracht und dann der Dampfreformierungsstufe als Brennstoff zugeführt wird.

Im Hinblick auf das erfindungsgemässe Verfahren ist es wesentlich, dass der Einsatzstrom in vielen Fällen an der Anlagengrenze unter Druck zur Verfügung steht, während andererseits die für die Dampfreformierung benötigte Energie üblicherweise durch Verbrennung eines geeigneten Energieträgers bei niedrigem Druck bereit gestellt wird. Erfindungsgemäss wird nun ein Teilstrom des Einsatzstromes der Verbrennung zugeführt, was eine Entspannung dieses Teilstroms erforderlich macht. Die bei dieser Entspannung anfallende Kälte wird in einem Wärmetauscher an einen Strom übertragen, der anschliessend in einen durch Temperaturabsenkung begünstigten Verfahrensschritt behandelt wird. Diese Verfahrensführung hat nicht nur den Vorteil der Verbesserung der Verfahrensbedingungen in diesem nachfolgenden Verfahrensschritt, sondern führt auch zu einer erwünschten Erwärmung der zu verbrennenden Einsatzmenge, durch die eine Auskondensation von Flüssigkeit im Brenner verhindert werden kann.

Weitere Einzelheiten der Erfindung werden nachfolgend anhand zweier Ausführungsbeispiele, die in den Figuren schematisch dargestellt sind, erläutert.

Es zeigen:

Figur 1 ein Verfahren zum Dampfreformieren von Kohlenwasserstoffen mit einer anschliessenden adsorptiven Reinigung und

Figur 2 ein Hochdrucksyntheseverfahren.

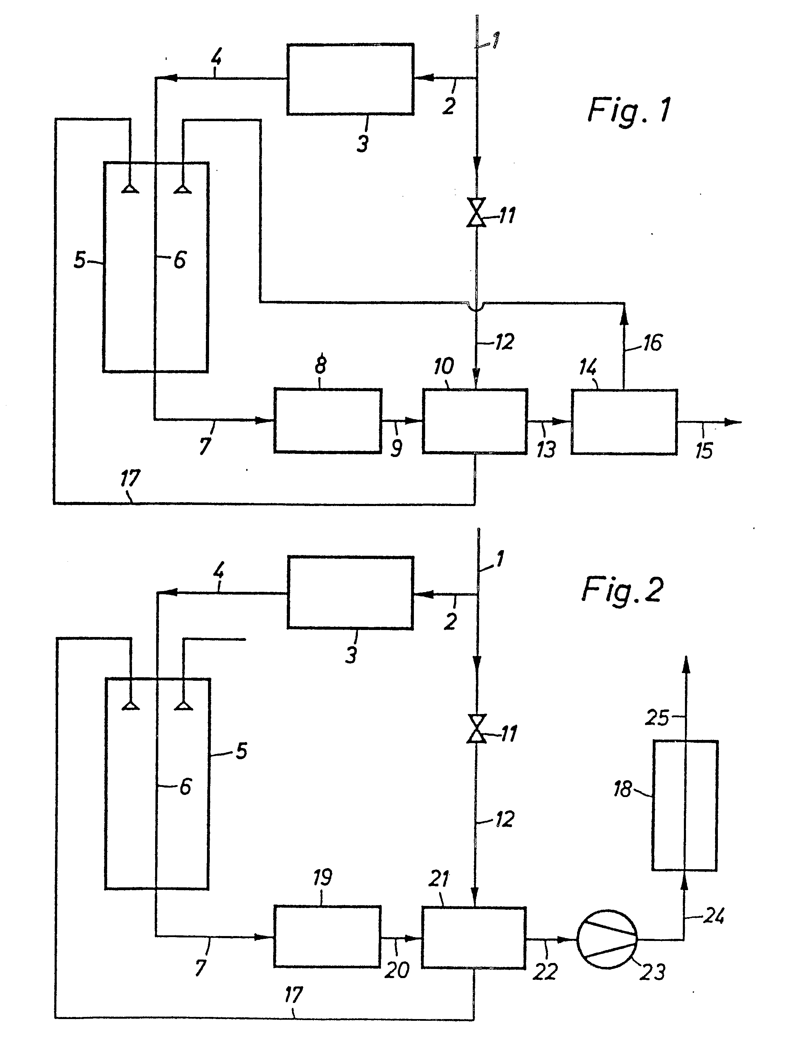

In dem in Figur 1 dargestellten Blockschema wird über Leitung 1 ein im wesentlichen aus Butan bestehender Einsatzstrom unter einem Druck von 30°C zugeführt. Der Hauptstrom dieses Einsatzes wird über Leitung 2 zunächst bei 3 vorgewärmt, entschwefelt und mit Wasser versetzt. Anschliessend gelangt das Gemisch über Leitung 4 in einen Reformierofen 5 und wird dort beim Durchströmen der von aussen beheizten Rohre 6 zu einem im wesentlichen aus Wasserstoff und Kohlenoxiden bestehenden Synthesegas umgesetzt, das über Leitung 7 abgezogen wird. In der nachfolgenden Verfahrensstufe 8 tritt das Synthesegas zunächst in ein Abhitzesystem ein, in dem es beispielsweise unter Dampferzeugung abgekühlt wird und durchläuft dann eine Konvertierstufe, in der der Kohlenmonoxidgehalt durch Reaktion mit Wasserdampf unter Bildung weiteren Wasserstoffs herabgesetzt wird. Nach weiterer Abkühlung tritt das Rohgas schliesslich aus der Verfahrensstufe 8 aus und wird über Leitung 9 in einem weiteren Wärmetauscher 10 gegen einen bei 11 entspannten Teilstrom 12 des Einsatzstromes 1 weiter abgekühlt, bevor es über Leitung 13 einer Druckwechseladsorptionsanlage 14 zugeführt wird.

Die Druckwechseladsorptionsanlage 14 besteht aus einer Mehrzahl von Adsorbern, die in üblicher Weise wechselweise in einer Adsorptionsanlage und in einer Desorptions- oder Regenerierphase betrieben werden. Während einer Adsorptionsphase tritt gereinigter Wasserstoff aus einem Adsorber aus und wird über Leitung 15 als Produktstrom abgegeben. Ein bei der Regenerierung anfallendes Spülgas, das die während eine Adsorptionsphase gebundenen Komponenten enthält, wird über Leitung 16 abgezogen und zur Beheizung des Reformierofens 5 verwendet.

Der vom Einsatzstrom 1 abgezweigte Teilstrom 12 wird im Ventil 11 von 30 bar auf annähernd Atmosphärendruck entspannt und kühlt sich dabei auf etwa 10°C ab. Die dabei gewonnene Kälte wird im Wärmetauscher 10 an das der Druckwechseladsorptionsanlage 14 zugeführte Produktgas abgegeben, was eine Verbesserung der Adsorptionsbedingungen zur Folge hat. Der Teilstrom 12 wird im Wärmetauscher 10 wieder auf 20°C angewärmt und dann über Leitung 17 dem Reformierofen 5 als Brennstoff zugeführt. Bei einem Teilstrom von 1000 kg/h, die als Feuerung im Reformierofen benötigt werden, fällt dabei eine Kälteleistung von 315 000 kJ/h im Wärmetauscher 10 an.

Das in der Figur 2 dargestellte Blockschema bezieht sich auf Hochdrucksynthesen wie beispielsweise die Methanol- oder Ammoniaksynthese. Um die Hochdrucksynthese im Reaktor 18 durchführen zu können, ist es zunächst erforderlich, ein geeignetes Einsatzgemisch herzustellen. Dazu wird entsprechend dem Verfahren gemäss Figur 1 zunächst ein Kohlenwasserstrom über Leitungen 1 und 2 zugeführt und nach einer Vorbehandlung 3 in den Rohren 6 eines Dampfreformierers 5 umgesetzt. Das über Leitung 7 abgezogene Produktgas wird nach Kühlung, Reinigung und gegebenenfalls Modifizierung der Zusammensetzung entsprechend den Erfordernissen in der Hochdrucksynthese im Verfahrensschritt 19 aufgearbeitet. Anschliessend tritt es über Leitung 20 in einen Wärmetauscher 21 und wird hier gegen einen entspannten Teilstrom 12 des Einsatzstroms 1 weiter gekühlt. Über Leitung 22 gelangt es daraufhin in den Verdichter 23 und anschliessend über Leitung 24 in den Reaktor 18 für die Hochdrucksynthese. Das Produkt wird über Leitung 25 abgezogen und kann auf übliche Weise aufgearbeitet werden.

Die für die Beheizung des Reformierofens 5 erforderliche Energie kann ganz oder teilweise durch Verbrennung des im Ventil 11 entspannten Teilstroms 12 des Einsatzstroms 1 nach dessen Vorwärmung im Wärmetauscher 21 gedeckt werden.

## Patentansprüche

1. Verfahren zur Behandlung eines einer Dampfreformierung zu unterwerfenden, unter erhöhtem Druck stehenden Kohlenwasserstoffstromes, das ausserdem mindestens noch eine weitere Verfahrensstufe umfasst, die durch eine Temperaturabsenkung begünstigt wird, dadurch gekennzeichnet, dass der Einsatzstrom in zwei Teilströme unterteilt wird, von denen der eine der Dampfreformierung zugeführt und dabei umgesetzt wird, während der andere kälteleistend entspannt, mit dem aus der Dampfreformierung kommenden Strom, der der durch Temperaturabsenkung begünstigten Verfahrensstufe zugeführt wird, in Wärmetausch gebracht und dann der Dampfreformierungsstufe als Brennstoff zugeführt wird.

2. Verfahren nach Anspruch 1, dadurch gekennzeichnet, dass die durch Temperaturerniedrigung begünstigte Verfahrensstufe eine adsorptive Reinigung ist.

3. Verfahren nach Anspruch 1, dadurch gekennzeichnet, dass die durch Temperaturerniedrigung begünstigte Verfahrensstufe eine Verdichtung eines Gasstromes ist.

4. Vorrichtung zur Durchführung des Verfahrens nach einem der Ansprüche 1 bis 3 mit einem brennerbeheizten Reaktor (5), einer Kühleinrichtung (8, 10) und einer Vorrichtung (14, 23), deren Betriebsweise durch Temperaturabsenkung begünstigt wird, dadurch gekennzeichnet, dass eine mit einer Entspannungseinrichtung (11) versehene Leitung (12) von einer Zuleitung (1) zum Reaktor (5) abzweigt, zur Kühleinrichtung (10) führt und mit einer von der Kühleinrichtung (10) zu Brennern des Reaktors (5) führenden Leitung (17) in Verbindung steht.

5. Vorrichtung nach Anspruch 4, dadurch gekennzeichnet, dass die Vorrichtung, deren Betriebsweise durch Temperaturabsenkung begünstigt wird, eine Druckwechsel-Adsorptionsanlage (14) ist.

6. Vorrichtung nach Anspruch 4, dadurch gekennzeichnet, dass die Vorrichtung, deren Betriebsweise durch Temperaturabsenkung begünstigt wird, ein Verdichter (23) ist.

## Claims

1. A process for the treatment of a hydrocarbon stream under increased pressure which is to be subjected to a steam reforming step, which process comprises at least one further process step which is promoted by reduction in temperature, characterised in that the starting stream is divided into two substreams, one of which is fed to the steam reforming step and thereby converted, whilst the other substream is expanded with the production of cold, brought into heat exchange with the stream leaving the steam reforming step and which is fed to the process step promoted by reduction in temperature, then fed as fuel to the steam reforming step.

2. A process as claimed in Claim 1, characterised in that the process step promoted by reduction in temperature is an adsorptive purification step.

3. A process as claimed in Claim 1, characterised in that the process step promoted by reduction in temperature is the compression of a gas stream.

4. Apparatus for carrying out the process as claimed in one of Claims 1 to 3, comprising a reactor (5), which is heated by burners, a colling device (8, 10) and a device (14, 23), the operation of which is promoted by reduction in temperature, characterised in that a pipe (12) provided with an expansion device (11) branches off from a supply pipe (1) to the reactor (5), leads to the cooling device (10) and is connected to a pipe (17) leading from the cooling device (10) to burners of the reactor (5).

5. Apparatus as claimed in Claim 4, characterised in that the device, the operation of which is promoted by reduction in temperature, is a pressure swing adsorption installation (14).

6. Apparatus as claimed in Claim 4, characterised in that the device, the operation of which is promoted by reduction in temperature, is a compressor (23).

## Revendications

1. Procédé pour réaliser le traitement d'un courant d'hydrocarbures sous pression élevée, devant être soumis à un reformage à la vapeur et qui en outre comprend au moins encore une autre étape opératoire qui est favorisée par un abaissement de la température, caractérisé en ce que le courant de charge est subdivisé en deux courants partiels dont l'un est soumis à un reformage à la vapeur et est alors transformé, tandis que l'autre courant partiel, détendu en produisant du froid, et amené en échange thermique avec le courant fourni par le reformage à la vapeur et qui est soumis à l'étape opératoire favorisée par un abaissement de la température, et est ensuite envoyé en tant que combustible à l'étape de reformage à la vapeur.

2. Procédé selon la revendication 1, caractérisé en ce que l'étape opératoire favorisée par un abaissement de la température est une épuration par adsorption.

3. Procédé selon la revendication 1, caractérisé en ce que l'étape opératoire favorisée par un abaissement de la température et une compression du courant gazeux.

4. Dispositif pour la mise en œuvre du procédé selon l'une des revendications 1 à 3, comportant un réacteur (5) chauffé par des brûleurs, un dispositif de refroidissement (8, 10) et un dispositif (14, 23), dont le mode de fonctionnement est favorisé par un abaissement de la température, caractérisé en ce qu'une conduite (12) munie d'un dispositif de détente (11), est dérivée d'une conduite d'amenée (1) aboutissant au réacteur (5), aboutit au dispositif de refroidissement (10) et est reliée à une conduite (17) reliant le dispositif de refroidissement (10) à des brûleurs du réacteur (5).

5. Dispositif selon la revendiction 4, caractérisé en ce que le dispositif, dont le mode de fonctionnement est favorisé par un abaissement de la température, est une installation (14) d'adsorption par alternance, sous pression.

6. Dispositif selon la revendication 4, caractérisé en ce que la dispositif, dont le mode de fonctionnement est favorisé par un abaissement de la température, est un compresseur (23).

0 042 541

Fig. 1

Fig. 2